# EUROPEAN PATENT APPLICATION

(11) **EP 2 614 791 A1**
(43) Date of publication of application: **17.07.2013**
(21) Application number: 11823039.0
(22) Date of filing: 04.08.2011
(51) Int. Cl.: A61C 7/14

(54) **METHOD FOR MANUFACTURING POSITIONING TRAY AND BRACKET WITH POSITIONING HOOK FOR MANUFACTURING POSITIONING TRAY**

(30) Priority: 10.09.2010 CN 201010280655
(71) Applicant: Guangzhou Riton Biomaterial Co., Ltd., Guangdong 510005 (CN)
(72) Inventor: HUANG, Weihong, Guangzhou International Bioisland Guangdong 510005 (CN); LIN, Jiuxiang, Guangzhou International Bioisland Guangdong 510005 (CN); WANG, Hongwei, Guangzhou International Bioisland Guangdong 510005 (CN); LI, Zu'an, Guangzhou International Bioisland Guangdong 510005 (CN); LIN, Fengyan, Guangzhou International Bioisland Guangdong 510005 (CN)
(74) Representative: Bergmeier, Werner
(86) International application number: PCT/CN2011/078037
(87) International publication number: WO 2012/031516

(57) **Abstract**

The present invention discloses a method for manufacturing a positioning tray and a bracket with a positioning hook for manufacturing the positioning tray. The method for manufacturing the positioning tray comprises the following steps: acquiring an original dental impression and an ideal dental impression; transforming the ideal dental impression to a three-dimensional digital model and drawing each bracket body; drawing a positioning hook on the bracket body; making a wax pattern of a bracket with the positioning hook by using a wax pattern machine; casting, with the wax pattern as a mould core, a blank of the bracket with the positioning hook which then receives surface treatment; after the surface treatment, assembling the bracket with the positioning hook to the original dental impression and performing film lamination to obtain a positioning tray, and finally removing the positioning hook to obtain the bracket matching the positioning tray. The bracket with the positioning hook is manufactured for implementing the method. It is unnecessary to make an integrated model of the bracket and dental impression, which greatly reduces the production cost. Moreover, a finished appliance can be obtained after cutting off the positioning hook, and it is unnecessary to cast a separate bracket additionally, thereby saving costs and shortening the production cycle.

## Description

### FIELD OF THE INVENTION

The present invention relates to a method for manufacturing positioning tray and bracket with positioning hook for manufacturing positioning tray with respect to individualized orthodontic appliances in the field of stomatology.

### BACKGROUND OF THE INVENTION

At present, more and more patients select individualized orthodontic appliances to correct their teeth. An individualized orthodontic appliance is generally composed of brackets, archwires, elastic pressure rings and resin fillers. Each bracket is designed according to the actual dental pattern of the patient. One side of the bracket is closely attached to the lingual tooth surface and the other side is disposed with a groove. The archwire passes through the groove to connect each bracket, the archwire and the bracket are then relatively fixed by the elastic pressure ring, and a certain amount of resin fillers will be filled between the bracket, the archwire and the tooth surface based on actual fitness so as to increase orthodontic effects. After the individualized orthodontic appliance is applied, teeth will be gradually corrected as required as the bracket is both attached to the tooth surface and slides on the archwire. Consequently, as individualized orthodontic appliance has high requirements on tooth surface fitness precision, when the individualized orthodontic appliance is applied, a positioning tray is required. The positioning tray is made according to the shape formed between the individualized orthodontic appliance and the actual dental pattern. When the positioning tray is applied, each bracket has to be firstly embedded in the dental pattern recess of the positioning tray, and then attach the positioning tray to the patient's teeth to fix each bracket and finally use archwire and elastic pressure rings to connect the brackets. At present, there are two methods to make the positioning tray. One is to manually place the bracket on the original dental impression to make the positioning tray after the original dental impression is obtained from the patient. By using this method, it is easy to accurately find out the tooth surface fitness position with respect to incisors and molars whose curvature is high, but it is difficult to find out the appropriate fitness position of canine teeth whose curvature is low. The other method is to use a computer to firstly draw a three-dimensional digital model after the original dental impression has been accurately attached to the orthodontic appliance, and then make the model as a whole, and finally use the model to perform film lamination to make the positioning tray. Afterwards, make the orthodontic appliance based on the three-dimensional digital model of the appliance. By using this method, the production costs are high and production cycle is long. As a result, it is necessary to solve the above problems.

### SUMMARY OF THE INVENTION

The objective of the present invention is to provide a method for manufacturing positioning tray and bracket with positioning hook for manufacturing positioning tray. The positioning tray produced by using this method ensures that the orthodontic appliance can be precisely attached to the tooth surface and meanwhile the process costs are low and it is easy to operate.

The present invention also provides a bracket with positioning hook for manufacturing the positioning tray.

The solution of the present invention to solve the technical problems is as follows:

A method for manufacturing positioning tray, comprising the following steps:
1. Acquiring more than two dental impressions from a patient, arranging teeth on one of the dental impressions as an ideal dental impression and using the rest dental impressions as original dental impressions;
2. Transforming the ideal dental impression to a three-dimensional digital model and drawing the three-dimensional digital model of each corresponding bracket body on each tooth;
3. Using the ideal dental impression as a base to draw a plurality of corresponding positioning hooks on the three-dimensional digital model of each bracket body; the positioning hook is at the dental crown of the corresponding bracket body and forms a bracket with positioning hook with the bracket body, so that the bracket with positioning hook is able to be accurately attached to the corresponding tooth surface by means of the positioning hook;
4. Putting the three-dimensional digital model of the bracket with positioning hook into a wax pattern machine to make a wax pattern of the bracket with positioning hook;
5. Using the wax pattern as a mould core to cast a blank of the bracket with positioning hook and then conducting surface treatment on the blank; and
6. After the surface treatment, assembling the blank of the bracket with positioning hook to the original dental impression and performing film lamination based on the assembled part to obtain a positioning tray.

As an improvement to the foregoing technical solution, in step 2, the method to transform the ideal dental impression to the three-dimensional digital model by using a computer includes using a scanner to measure the ideal dental impression to make the three-dimensional digital model recognizable by the computer, or using a bundle CT to scan the patient's teeth to obtain the dentition data and then establishing the three-dimensional digital model of the teeth by means of reverse engineering.

As an improvement to the foregoing technical solution, in step 4, the method to make the wax pattern of the bracket with positioning hook includes using a slicing software to stratify the three-dimensional digital model of the bracket with positioning hook to obtain a two-dimensional model of each stratified section, and then making a wax pattern of the bracket with positioning hook with the wax pattern machine based on said two-dimensional model.

As an improvement to the foregoing technical solution, when the slicing software is used to stratify the three-dimensional digital model of the bracket with positioning hook, the thickness of the stratified section is taken as 15-50µm and using layer cumulative error compensation method to control the manufacturing precision.

As an improvement to the foregoing technical solution, the thickness of the positioning hook is 0.3-0.6 mm.

As an improvement to the foregoing technical solution, the number of the positioning hook on each bracket body is two.

As an improvement to the foregoing technical solution, in step 5, the surface treatment of the blank includes polishing, electrolysis and groove precision detection.

As an improvement to the foregoing technical solution, the positioning tray manufacturing method also includes the step to remove the positioning hook from the bracket with positioning hook after performing film lamination on the positioning tray.

With respect to a bracket with positioning hook for manufacturing positioning tray, the bracket with positioning hook is disposed with a plurality of positioning hooks fastened on the dental crown of the corresponding tooth.

As an improvement to the foregoing technical solution, the number of the positioning hook is two.

Advantages of the invention are summarized below: during the conventional procedures to make the three-dimensional digital model of the bracket, an intermediate step to make positioning hook is introduced. Consequently, at the stage of three-dimensional digital model, the bracket itself can be accurately attached to the ideal dental impression by means of positioning of the positioning hook. It is only necessary to make a wax pattern of the bracket with positioning hook and use the wax pattern as a mould core to make the bracket with positioning hook. After the bracket with positioning hook matches with the original dental impression, a molding base can be obtained to make the positioning tray. The bracket and the original dental impression are unnecessary to be made as the molding base; therefore the production costs are largely reduced. In addition, after the position hook of the bracket with positioning hook is cut, the bracket without positioning hook that completely matches with the original dental impression and the positioning tray can be obtained. As a result, orthodontic appliances can be immediately finished without casting the brackets separately, thereby saving costs and shortening the production cycle.

### BRIEF DESCRIPTION OF THE DRAWINGS

The present invention is described in further below with reference to the accompanying drawings.
- **FIG. 1**: is an axonometric drawing of a single bracket with positioning hook produced by means of the method provided by the invention;
- **FIG. 2**: is an assembly drawing of the bracket with positioning hook and teeth of the invention;
- **FIG. 3**: is an axonometric drawing of a positioning tray produced by means of the method provided by the invention; and
- **FIG. 4**: is a schematic diagram of a bracket without positioning hook produced by means of the method provided by the invention.

### DETAILED DESCRIPTION OF THE EMBODIMENTS

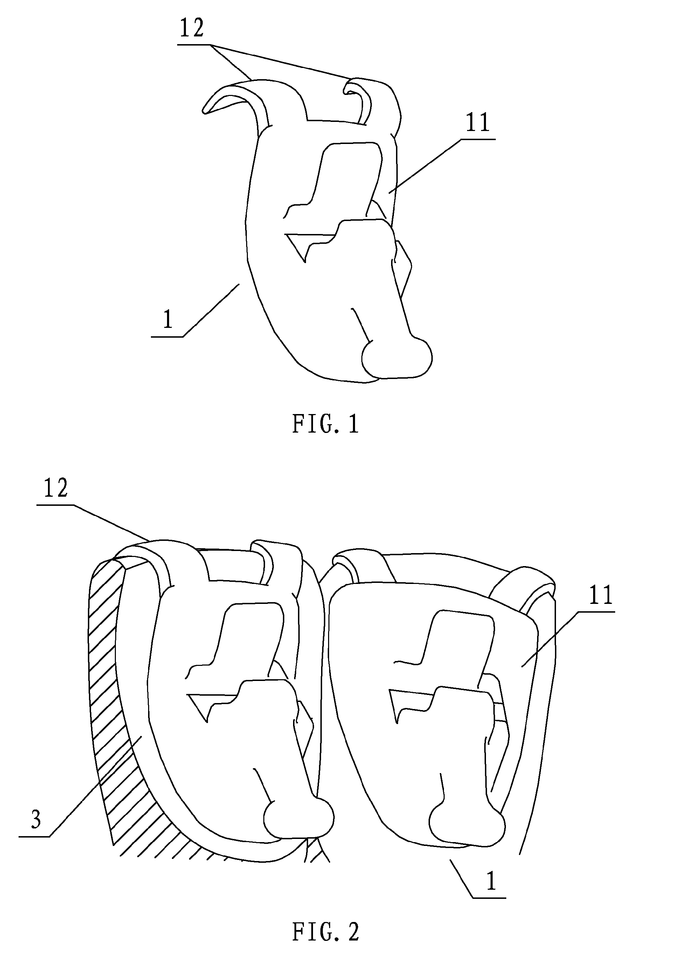

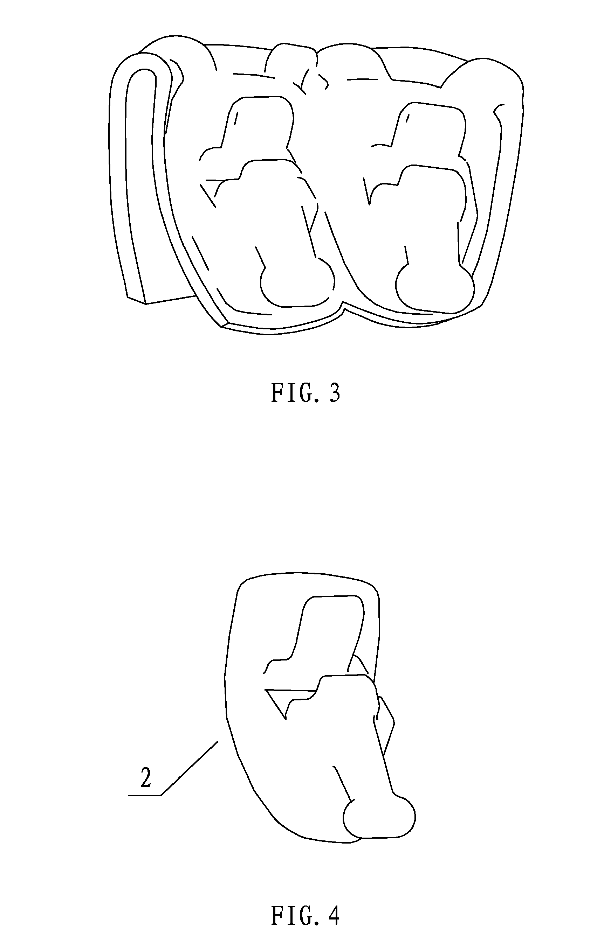

As shown in FIGS. 1-4, a method for manufacturing positioning tray, comprising the following steps:
1. Acquiring more than two dental impressions from a patient, arranging teeth on one of the dental impressions as an ideal dental impression and using the rest dental impressions as original dental impressions;
2. Transforming the ideal dental impression to a three-dimensional digital model by using a computer and drawing the three-dimensional digital model of each corresponding bracket body 11 on each tooth;
3. Using the ideal dental impression as a base to draw a plurality of corresponding positioning hooks 12 on the three-dimensional digital model of each bracket body 11; the positioning hook 12 is at the dental crown of the corresponding bracket body 11 and forms a bracket with positioning hook 1 with the bracket body 11, so that the bracket with positioning hook 1 is able to be accurately attached to the corresponding tooth surface 3 by means of the positioning hook 12;
4. Putting the three-dimensional digital model of the bracket with positioning hook 1 into a wax pattern machine to make a wax pattern of the bracket with positioning hook 1;
5. Using the wax pattern as a mould core to cast a blank of the bracket with positioning hook 1 and then conducting surface treatment on the blank; and
6. After the surface treatment, assembling the blank of the bracket with positioning hook 1 to the original dental impression and performing film lamination based on the assembled part to obtain a positioning tray.

As an improvement to the foregoing technical solution, in step 2, the method to transform the ideal dental impression to the three-dimensional digital model by using a computer includes using a scanner to measure the ideal dental impression to make the three-dimensional digital model recognizable by the computer, or using a bundle CT to scan the patient's teeth to obtain the dentition data and then establishing the three-dimensional digital model of the teeth by means of reverse engineering.

As an improvement to the foregoing technical solution, in step 4, the method to make the wax pattern of the bracket with positioning hook includes using a slicing software to stratify the three-dimensional digital model of the bracket with positioning hook 1 to obtain a two-dimensional model of each stratified section, and then making a wax pattern of the bracket with positioning hook 1 with the wax pattern machine based on said two-dimensional model.

As an improvement to the foregoing technical solution, when the slicing software is used to stratify the three-dimensional digital model of the bracket with positioning hook 1, the thickness of the stratified section is taken as 15-50µm and using layer cumulative error compensation method to control the manufacturing precision.

As an improvement to the foregoing technical solution, the thickness of the positioning hook is 0.3-0.6 mm. Different thickness can be selected due to different materials, but the thickness of the bracket body 11 is generally the same.

As an improvement to the foregoing technical solution, the number of the positioning hook 12 on each bracket body 11 is two.

As an improvement to the foregoing technical solution, in step 5, the surface treatment of the blank includes polishing, electrolysis and groove precision detection.

As an improvement to the foregoing technical solution, the positioning tray manufacturing method also includes the step to remove the positioning hook 12 from the bracket with positioning hook 1 after performing film lamination on the positioning tray.

With respect to a bracket with positioning hook for manufacturing positioning tray, the bracket with positioning hook is disposed with a plurality of positioning hooks 12 fastened on the dental crown of the corresponding tooth.

As an improvement to the foregoing technical solution, the number of the positioning hook 12 is two.

The following is an example showing the method for manufacturing the positioning tray of the invention:
1. Acquiring more than two dental impressions from a patient with impression material, arranging teeth on one of the dental impressions as an ideal dental impression and using the rest dental impressions as original dental impressions;
2. Using a scanner to measure the ideal dental impression, inputting the scanned data into a computer, using the conversion software of the scanner to automatically transform the data to a STL model of the ideal dental impression, and drawing a three-dimensional digital model of each bracket body 11 corresponding to each tooth;
3. Using the teeth surface of the ideal dental impression as a base to draw two corresponding positioning hooks 12 with thickness of 0.3 mm on the STL model of each bracket body 11 with Clay Tool 3D graphics software; the positioning hook 12 is on the mating surface of the corresponding bracket body 11 and forms a bracket with positioning hook 1 with the bracket body 11, so that the bracket with positioning hook 1 is able to be accurately attached to the corresponding tooth surface 3 by means of the positioning hook 12;
4. Putting the STL model of the bracket with positioning hook 1 into a DLP wax pattern machine, using a slicing software to stratify the STL model, taking the thickness of the stratified section as 15µm, using layer cumulative error compensation method to control the manufacturing precision at 25µm and finally using resin material to make a wax pattern of the bracket with positioning hook 1;
5. Using the wax pattern of the bracket with positioning hook 1 as a mould core and titanium alloy as casting material to make a blank of the bracket with positioning hook 1 with precision of 10µm and then conducting polishing, electrolysis and groove precision detection on the blank. If the precision is not enough, it has to be reworked until it meets the requirements;
6. After the surface treatment, assembling the bracket with positioning hook 1 that meets the precision requirements to the original dental impression and performing film lamination with methacrylic acid based on the assembled part to obtain a finished positioning tray; and
7. Using a long scissor to cut each positioning hook 12 of the bracket with positioning hook 1.

The following is an example of a bracket with positioning hook for manufacturing the positioning tray:

After each positioning hook 12 of the bracket with positioning hook 1 is cut by using a long scissor, a bracket without positioning hook 2 is obtained. Once the bracket without positioning hook 2 is ground and polished, assemble it with an archwire and elastic pressure rings to obtain the individualized orthodontic appliance that matches the positioning tray.

The foregoing descriptions are detailed descriptions of the preferred embodiments and they are not intended to limit the invention. Those skilled in the art can make changes and modifications without departing from the spirit of the invention and equivalent changes and modifications are encompassed in the appended claims of the invention.

## Claims

1. A method for manufacturing positioning tray, comprising the following steps:
1. Acquiring more than two dental impressions from a patient, arranging teeth on one of the dental impressions as an ideal dental impression and using the rest dental impressions as original dental impressions;
2. Transforming the ideal dental impression to a three-dimensional digital model by using a computer and drawing the three-dimensional digital model of each corresponding bracket body (11) on each tooth;
3. Using the ideal dental impression as a base to draw a plurality of corresponding positioning hooks **(12)** on the three-dimensional digital model of each bracket body **(11);** the positioning hook **(12)** is at the dental crown of the corresponding bracket body **(11)** and forms a bracket with positioning hook (**1**) with the bracket body (**11**), so that the bracket with positioning hook (1) is able to be accurately attached to the corresponding tooth surface by means of the positioning hook **(12);**
4. Putting the three-dimensional digital model of the bracket with positioning hook **(1)** into a wax pattern machine to make a wax pattern of the bracket with positioning hook **(1);**
5. Using the wax pattern as a mould core to cast a blank of the bracket with positioning hook **(1)** and then conducting surface treatment on the blank; and
6. After the surface treatment, assembling the blank of the bracket with positioning hook **(1)** to the original dental impression and performing film lamination based on the assembled part to obtain a positioning tray.

2. The method for manufacturing positioning tray according to claim **1,** wherein, in step 2, the method to transform the ideal dental impression to the three-dimensional digital model by using a computer includes using a scanner to measure the ideal dental impression to make the three-dimensional digital model recognizable by the computer, or using a bundle CT to scan the patient's teeth to obtain the dentition data and then establishing the three-dimensional digital model of the teeth by means of reverse engineering.

3. The method for manufacturing positioning tray according to claim **1,** wherein, in step 4, the method to make the wax pattern of the bracket with positioning hook **(1)** includes using a slicing software to stratify the three-dimensional digital model of the bracket with positioning hook **(1)** to obtain a two-dimensional model of each stratified section, and then making a wax pattern of the bracket with positioning hook **(1)** with the wax pattern machine based on said two-dimensional model.

4. The method for manufacturing positioning tray according to claim **3,** wherein when the slicing software is used to stratify the three-dimensional digital model of the bracket with positioning hook **(1),** the thickness of the stratified section is taken as 15-50µm and using layer cumulative error compensation method to control the manufacturing precision.

5. The method for manufacturing positioning tray according to claim **1,** wherein the thickness of the positioning hook **(12)** is 0.3-0.6mm.

6. The method for manufacturing positioning tray according to claim **1,** wherein the number of the positioning hook **(12)** on each bracket body **(11)** is two.

7. The method for manufacturing positioning tray according to claim **1,** wherein, in step **5,** the surface treatment of the blank includes polishing, electrolysis and groove precision detection.

8. The method for manufacturing positioning tray according to claim **1,** wherein the positioning tray manufacturing method also includes the step to remove the positioning hook **(12)** from the bracket with positioning hook **(1)** after performing film lamination on the positioning tray.

9. A bracket with positioning hook for manufacturing positioning tray, wherein the bracket with positioning hook is disposed with a plurality of positioning hooks **(12)** fastened on the dental crown of the corresponding tooth.

10. The bracket with positioning hook for manufacturing positioning tray according to claim 9, wherein the number of the positioning hooks (12) is two.
